# EUROPÄISCHE PATENTANMELDUNG

(11) **EP 4 159 358 A1**
(43) Veröffentlichungstag der Anmeldung: **05.04.2023**
(21) Anmeldenummer: 21200533.4
(22) Anmeldetag: 01.10.2021
(51) Int. Cl.: B23K 26/067, B23K 26/21, B23K 101/38

(54) **VERFAHREN ZUR HERSTELLUNG EINES AKTIVTEILS FÜR EINE ROTIERENDE ELEKTRISCHE MASCHINE, AKTIVTEIL FÜR EINE ROTIERENDE ELEKTRISCHE MASCHINE UND ROTIERENDE ELEKTRISCHE MASCHINE**

(71) Anmelder: Valeo eAutomotive Germany GmbH, 91056 Erlangen (DE)
(72) Erfinder: DOTZ, Boris, 97616 Bad Neustadt a.d.Saale (DE); FINGER-ALBERT, Christian, 97616 Bad Neustadt a.d.Saale (DE); BEETZ, Sebastian, 97616 Bad Neustadt a.d.Saale (DE); Förster, David, 97616 Bad Neustadt a.d.Saale (DE)
(74) Vertreter: Valeo Powertrain Systems

(57) **Zusammenfassung**

Verfahren zur Herstellung eines Aktivteils (1) für eine rotierende elektrische Maschine (101), umfassend folgende Schritte:
- Bereitstellen eines Kerns (2) für das Aktivteil (1) und in den Kern eingesetzter Formleiter (6), wobei der Kern (2) eine Stirnseite (3), eine der Stirnseite (4) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und eine Endfläche (9) aufweist;
- Aneinanderfügen von jeweils zwei der Endflächen (9), sodass die zwei Endflächen (9) ein Paar (10) bilden; und
- Verschweißen eines jeweiligen Paars (10) der Endflächen (9) mittels eines Laserstrahls, der auf den Endflächen (9) des Paars (10) entlang einer ersten Trajektorie (13) und einer zweiten Trajektorie (14) geführt wird, wobei die erste Trajektorie (13) und die zweite Trajektorie (14) jeweils einen Anfangspunkt (13a, 14a) und einen davon unterschiedlichen Endpunkt (13b, 14b) aufweisen, wobei die erste Trajektorie (13) und die zweite Trajektorie (14) zwischen dem Anfangspunkt (13a, 14a) und dem Endpunkt (13b, 14b) konkav verlaufen

## Beschreibung

Die Erfindung betrifft ein Verfahren zur Herstellung eines Aktivteils für eine rotierende elektrische Maschine, umfassend folgende Schritte: Bereitstellen eines Kerns für das Aktivteil und in den Kern eingesetzter Formleiter, wobei der Kern eine Stirnseite, eine der Stirnseite gegenüberliegende weitere Stirnseite und mehrere in Umfangsrichtung angeordnete Nuten, in denen die Formleiter angeordnet sind, aufweist, wobei sich die Formleiter von der Stirnseite zur weiteren Stirnseite erstrecken und jeweils ein freies Ende aufweisen, welches an der Stirnseite herausragt und eine Endfläche aufweist; Aneinanderfügen von jeweils zwei der Endflächen, sodass die zwei Endflächen ein Paar bilden; und Verschweißen eines jeweiligen Paars der Endflächen mittels eines Laserstrahls, der auf den Endflächen des Paars entlang einer ersten Trajektorie und einer zweiten Trajektorie geführt wird, wobei die erste Trajektorie und die zweite Trajektorie jeweils einen Anfangspunkt und einen davon unterschiedlichen Endpunkt aufweisen.

Daneben betrifft die Erfindung ein Aktivteil für eine rotierende elektrische Maschine und eine rotierende elektrische Maschine.

Die WO 2019/159737 A1 offenbart in einen Kern eingesetzte Spulensegmente. Endabschnitte der Spulensegmente werden gegeneinander gefügt und Oberflächen der Endabschnitte, die eine Fläche mit einer Begrenzung bilden, mittels Laserlichts bestrahlt und verschweißt. Das Laserlicht wird über mehrere Trajektorien geführt.

Beim Verschweißen von Endabschnitten von in einen Kern eingesetzten Formleitern besteht die Anforderung, eine stabile und elektrisch gut leitfähige Schweißverbindung auszubilden. Ferner soll ein möglichst geringer Energieeintrag in die Endflächen erfolgen, um bei beschichteten Formleitern ein Aufschmelzen ihrer Beschichtung zu vermeiden.

Der Erfindung liegt die Aufgabe zugrunde, eine gegenüber dem Stand der Technik verbesserte Möglichkeit zur Herstellung eines Aktivteils für eine rotierende elektrische Maschine anzugeben.

Erfindungsgemäß wird diese Aufgabe bei einem Verfahren der eingangs genannten Art dadurch gelöst, dass die erste Trajektorie und die zweite Trajektorie zwischen dem Anfangspunkt und dem Endpunkt konkav verlaufen.

Das erfindungsgemäße Verfahren zur Herstellung eines Aktivteils für eine rotierende elektrische Maschine umfasst einen Schritt des Bereitstellens eines Kerns für das Aktivteil und von Formleitern. Die Formleiter sind in den Kern eingesetzt. Der Kern weist eine Stirnseite auf. Der Kern weist ferner eine weitere Stirnseite auf. Die weitere Stirnseite liegt der Stirnseite gegenüber. Der Kern weist ferner mehrere Nuten auf. Die Nuten sind in Umfangsrichtung angeordnet. In den Nuten sind die Formleiter angeordnet. Die Formleiter erstrecken sich von der Stirnseite zur weiteren Stirnseite. Die Formleiter weisen jeweils ein freies Ende auf. Das freie Ende weist eine Endfläche auf. Das erfindungsgemäße Verfahren umfasst ferner einen Schritt des Aneinanderfügens von jeweils zwei der Endflächen, sodass die zwei Endflächen ein Paar bilden. Das Verfahren weist ferner einen Schritt des Verschweißens eines jeweiligen Paars der Endflächen auf. Das Verschweißen erfolgt mittels eines Laserstrahls. Der Laserstrahl wird auf den Endflächen des Paars geführt. Der Laserstrahl wird entlang einer ersten Trajektorie geführt. Der Laserstrahl wird ferner entlang einer zweiten Trajektorie geführt. Die erste Trajektorie und die zweite Trajektorie weisen jeweils einen Anfangspunkt auf. Die erste Trajektorie die zweite Trajektorie weisen jeweils ferner einen vom Anfangspunkt unterschiedlichen Endpunkt auf. Die erste Trajektorie und die zweite Trajektorie verlaufen zwischen dem Anfangspunkt und dem Endpunkt konkav.

Durch den erfindungsgemäß vorgesehenen konkaven Verlauf der Trajektorien des Laserstrahls können sowohl Eckbereiche der Endflächen als auch mittlere bzw. innenliegende Abschnitte der in Flächen vom Laserstrahl abgedeckt werden. Dadurch kann eine sorgfältige Schweißnaht bzw. Schweißfläche ausgebildet werden, die das Material der Endabschnitte effizient ausnutzt. Gleichzeitig kann, beispielsweise im Vergleich zu einer aus dem Stand der Technik bekannten geschlossenen, rechteckigen Trajektorie entlang der Ränder der in Flächen, ein geringerer Energieeintrag in die Formleiter erzielt werden.

Vorzugsweise ist der Kern aus einer Vielzahl geschichteter und/oder gegeneinander elektrisch isolierter Einzelbleche gebildet. Der Kern kann insofern auch als Blechpaket bezeichnet werden. Die Nuten können als Durchgangsöffnungen des Kerns, die sich von der Stirnseite zur weiteren Stirnseite erstrecken, ausgebildet sein.

Die Formleiter sind vorzugsweise aus Kupfer gebildet. Die Formleiter können als mehrfach gebogener Draht, der insbesondere eine U-Form oder eine V-Form aufweist, ausgebildet sein. Die Formleiter können ein dem freien Ende gegenüberliegen des weiteres freies Ende aufweisen, welches an der Stirnseite herausragt und ebenfalls eine Endfläche aufweist. Die freien Enden ragen bevorzugt aus unterschiedlichen Nuten an der Stirnseite heraus. Vorzugsweise wird oder werden durch das Verschweißen unterschiedlicher Formleiter miteinander ein oder mehrere Strompfade ausgebildet. Die Strompfade sind dazu eingerichtet, bei einer Bestromung ein magnetisches Feld zur Erzeugung einer elektromotorischen Kraft der rotierenden elektrischen Maschine zu erzeugen.

Die Formleiter können an dem oder einem jeweiligen freien Ende eine rechteckige oder abgerundet rechteckige Querschnittsfläche aufweisen. Die Querschnittsfläche kann zwei einander gegenüberliegende Langseiten und zwei einander gegenüberliegende Schmalseiten aufweisen. Vorzugsweise werden die Endflächen derart aneinandergefügt, dass jeweils eine Langseite der Formleiter des Paars einander zugewandt sind. Die Formleiter können eine äußere elektrisch isolierende Oberflächenschicht aufweisen, welche ein elektrisch leitfähiges Material der Formleiter umgibt. Es kann vorgesehen sein, dass an dem freien Ende oder an den freien Enden das elektrisch leitfähige Material freiliegt, sodass die Oberflächenschicht durch den Laserstrahl beim Verschweißen nicht beschädigt wird.

Zum Beispiel kann insbesondere das Verfahren zur Herstellung eines Aktivteils für eine rotierende elektrische Maschine folgende Schritte umfassen:
Bereitstellens eines Kerns für das Aktivteil und von Formleitern. Die Formleiter sind in den Kern eingesetzt. Der Kern weist eine Stirnseite auf. Der Kern kann ferner eine weitere Stirnseite aufweisen. Die weitere Stirnseite kann der Stirnseite gegenüberliegen. Der Kern kann ferner mehrere Nuten aufweisen. Die Nuten sind in Umfangsrichtung angeordnet. In den Nuten sind die Formleiter angeordnet. Die Formleiter erstrecken sich von der Stirnseite zur weiteren Stirnseite. Die Formleiter weisen jeweils ein freies Ende auf. Das freie Ende weist eine Endfläche auf. Das erfindungsgemäße Verfahren kann ferner einen Schritt des Aneinanderfügens von jeweils zwei der Endflächen umfassen, sodass die zwei Endflächen ein Paar bilden. Das Verfahren kann ferner einen Schritt des Verschweißens eines jeweiligen Paars der Endflächen aufweisen. Das Verschweißen kann mittels eines Laserstrahls erfolgen. Der Laserstrahl kann auf den Endflächen des Paars geführt werden. Der Laserstrahl kann entlang einer ersten Trajektorie geführt werden. Der Laserstrahl kann ferner entlang einer zweiten Trajektorie geführt werden. Die erste Trajektorie und die zweite Trajektorie können jeweils einen Anfangspunkt aufweisen. Die erste Trajektorie die zweite Trajektorie können jeweils ferner einen vom Anfangspunkt unterschiedlichen Endpunkt aufweisen. Ein Rand der Endfläche eines jeweiligen Formleiters kann aus einem inneren Randabschnitt und einem äußeren Randabschnitt bestehen, wobei der innere Randabschnitt einer der Endflächen eines jeweiligen Paars der Endflächen entlang des inneren Randabschnitts der anderen Endfläche des jeweiligen Paars der Endflächen verlaufen kann und zwischen den inneren Randabschnitten ein, insbesondere durch einen Spalt zwischen den inneren Randabschnitten oder eine Berührung der inneren Randabschnitte ausgebildeter, Grenzbereich verlaufen kann. Eine jeweilige Trajektorie kann auf einer Fläche verlaufen, auf deren Rand die äußeren Randabschnitte liegen und die den Grenzbereich einschließt. Die Fläche kann zumindest abschnittsweise durch die Schmalseiten und/oder durch die einander nicht zugewandten Langseiten begrenzt sein. Die erste Trajektorie kann insbesondere von jeweils einem Anfangspunkt, der sich in dem äußeren Randabschnitt der Endfläche befinden kann über den inneren Randabschnitt der Endfläche zum Endpunkt, der sich in dem äußeren Randabschnitt der Endfläche befinden kann, verlaufen. Die zweite Trajektorie kann insbesondere von jeweils einem Anfangspunkt, der sich in dem äußeren Randabschnitt der anderen Endfläche befinden kann über den inneren Randabschnitt der anderen Endfläche zum Endpunkt, der sich in dem äußeren Randabschnitt der anderen Endfläche befinden kann, verlaufen.

Im Detail kann bei dem erfindungsgemäßen Verfahren vorgesehen sein, dass ein Rand der Endfläche eines jeweiligen Formleiters aus einem inneren Randabschnitt und einem äußeren Randabschnitt besteht, wobei der innere Randabschnitt einer der Endflächen eines jeweiligen Paars der Endflächen entlang des inneren Randabschnitts der anderen Endfläche des jeweiligen Paars der Endflächen verläuft und zwischen den inneren Randabschnitten ein, insbesondere durch einen Spalt zwischen den inneren Randabschnitten oder eine Berührung der inneren Randabschnitte ausgebildeter, Grenzbereich verläuft. Eine jeweilige Trajektorie kann auf einer Fläche verläuft, auf deren Rand die äußeren Randabschnitte liegen und die den Grenzbereich einschließt. Die Fläche kann zumindest abschnittsweise durch die Schmalseiten und/oder durch die einander nicht zugewandten Langseiten begrenzt sein.

Ein jeweiliger Mittelpunkt der ersten Trajektorie und der zweiten Trajektorie kann näher an einem Mittelpunkt der Fläche liegen der Anfangspunkt und der Endpunkt der Trajektorie. Mit anderen Worten kann die Trajektorie zum Rand der Fläche hin geöffnet sein. Der Mittelpunkt einer jeweiligen Trajektorie ist insbesondere gleich weit vom Anfangspunkt und vom Endpunkt entfernt.

Außerdem kann die Fläche in einen ersten bis vierten Quadranten untergliedert sein. Die Quadranten können einen identischen Flächeninhalt aufweisen. Auf einer ersten Linie können dabei eine gemeinsame Grenzlinie des ersten und zweiten Quadranten und eine gemeinsame Grenzlinie des dritten und vierten Quadranten liegen. Auf einer zweiten Linie, die die erste Linie, insbesondere senkrecht, schneidet, kann eine gemeinsame Grenzlinie des ersten und vierten Quadranten und eine gemeinsame Grenzlinie des zweiten und dritten Quadranten liegen. Vorzugsweise liegt jede Ecke der Fläche bzw. des Paars der Endabschnitte in genau einem der Quadranten. Die vier Quadranten können sich im Schnittpunkt der ersten Linie und der zweiten Linie punktförmig berühren.

In bevorzugter Ausgestaltung ist vorgesehen, dass der Anfangspunkt und der Endpunkt der ersten Trajektorie in zwei unterschiedlichen, auf derselben Seite der ersten Linie liegenden Quadranten liegen und der Anfangspunkt und der Endpunkt der zweiten Trajektorie in unterschiedlichen, auf der anderen Seite der ersten Linie liegenden Quadranten liegen.

Gemäß einer Ausgestaltungsvariante verläuft die erste Linie entlang des Grenzabschnitts. Gemäß einer alternativen zweiten Ausgestaltungsvariante verläuft die zweite Linie entlang des Grenzabschnitts.

Es kann ferner vorgesehen sein, dass die erste Trajektorie und die zweite Trajektorie jeweils vollständig innerhalb derjenigen Quadranten verlaufen, in denen der Anfangspunkt und der Endpunkt der Trajektorie liegen.

Ein jeweiliger Schnittpunkt der ersten Trajektorie und der zweiten Trajektorie mit der zweiten Linie kann näher an der ersten Linie liegen als ein Schnittpunkt einer gedachten Geraden, die durch den Anfangspunkt und den Endpunkt der Trajektorie verläuft, mit der zweiten Linie.

Ferner kann jeder Quadrant diagonal in zwei Oktanten geteilt sein. Eine gemeinsame Grenzlinie von jeweils zwei benachbarten Oktanten kann zu einem Schnittpunkt der ersten Linie mit der zweiten Linie hinlaufen. Bildlich gesprochen bilden die gemeinsamen Grenzlinien der benachbarten Oktanten einen achtstrahligen Stern aus.

Dabei können sich die erste und die zweite Trajektorie jeweils über eine größere Strecke innerhalb der nicht benachbarten Oktanten der Quadranten, in denen die Trajektorie liegt, erstrecken als innerhalb der benachbarten Oktanten der Quadranten, in denen die Trajektorie liegt.

Alternativ oder zusätzlich kann vorgesehen sein, dass ein Energieeintrag des Laserstrahls entlang der ersten und zweiten Trajektorie innerhalb der nicht benachbarten Oktanten der Quadranten, in denen die Trajektorie liegt, größer als innerhalb der benachbarten Oktanten der Quadranten, in denen die Trajektorie liegt, ist.

Es ist ferner möglich, dass sich die erste Trajektorie und die zweite Trajektorie abschnittsweise entlang der gemeinsamen Grenzlinien der benachbarten Oktanten der Quadranten, in den die Trajektorie liegt, erstrecken. Zusätzlich kann die Trajektorie die beiden Grenzlinien die erste oder die zweite Linie schneidend miteinander verbinden. Die Verbindung zwischen den gemeinsamen Grenzlinien kann gerade verlaufen.

Die erste und die zweite Trajektorie können spiegelsymmetrisch bezüglich des Grenzbereichs oder bezüglich einer gegenüber dem Grenzbereich parallelverschobenen Symmetrielinie verlaufen.

Allgemein kann bei dem erfindungsgemäßen Verfahren vorgesehen sein, dass die erste und die zweite Trajektorie jeweils eine gewölbte Kurve, insbesondere einen Kreisbogen, einen Ellipsenbogen, eine Parabel oder eine Hyperbel, auf der Fläche beschreiben.

Alternativ kann vorgesehen sein, dass die erste und die zweite Trajektorie jeweils einen ersten bis dritten geraden Abschnitt aufweisen oder daraus bestehen, wobei sich der erste gerade Abschnitt vom Anfangspunkt aus erstreckt, sich der dritte gerade Abschnitt zum Endpunkt hin erstreckt und der zweite gerade Abschnitt den ersten geraden Abschnitt mit dem zweiten geraden Abschnitt verbindet. Der zweite gerade Abschnitt kann mit dem ersten geraden Abschnitt und dem dritten geraden Abschnitt jeweils einen rechten Winkel einschließen. Es ist auch möglich, dass der zweite gerade Abschnitt mit dem ersten geraden Abschnitt und dem dritten geraden Abschnitt jeweils einen Winkel von mehr als 90°, beispielsweise wenigstens 100°, bevorzugt wenigstens 120°, besonderes bevorzugt wenigstens 130°, einschließen kann.

In Weiterbildung des erfindungsgemäßen Verfahrens kann vorgesehen sein, dass der Laserstrahl im Schritt des Verschweißens ferner entlang einer dritten Trajektorie geführt wird, die, insbesondere überschneidungsfrei, zwischen der ersten und zweiten Trajektorie liegt und einen Anfangspunkt und einen davon unterschiedlichen Endpunkt aufweist. Dadurch kann ein Energieeintrag im Bereich der Mitte des Paars vergrößert werden, da ein Energieeintrag in diesem Bereich einen geringeren Einfluss auf die Beschichtung der Formleiter hat. Die dritte Trajektorie kann den Grenzbereich schneiden und/oder gerade verlaufen.

Beim erfindungsgemäßen Verfahren kann eine den Laserstrahl erzeugende Laservorrichtung verwendet werden, welchen einem deaktivierten Zustand, in welchem der Laserstrahl abgeschaltet ist oder eine für ein auf schmelzen eines Materials der Formleiter unzureichende Leistung aufweist, und in einem aktivierten Zustand, in welchem der Laserstrahl das Material des Formleiters aufschmelzen kann, betreibbar ist. Der Schritt des Verschweißens kann dabei für eine jeweilige Trajektorie folgende Schritte umfassen: Ausrichten der Leservorrichtung auf den Anfangspunkt der Trajektorie im deaktivierten Zustand; Führen des Laserstrahls im aktivierten Zustand der Laservorrichtung vom Anfangspunkt entlang der Trajektorie zum Endpunkt der Trajektorie; wobei die Laservorrichtung zwischen dem Ausrichten und dem Führen aus dem deaktivierten Zustand in den aktivierten Zustand überführt wird, wenn die Laservorrichtung auf den Anfangspunkt der Trajektorie ausgerichtet ist, und aus dem aktivierten Zustand in den deaktivierten Zustand überführt wird, wenn das Führen den Endpunkt der Trajektorie erreicht hat.

Bei dem Aktivteil kann es sich um einen Stator oder um einen Rotor handeln. Der Rotor ist insbesondere fremderregt. Der Rotor kann auch permanenterregt sein.

Die der Erfindung zugrunde liegende Aufgabe wird ferner gelöst durch ein Aktivteil für eine rotierende elektrische Maschine, erhalten durch das erfindungsgemäße Verfahren und/oder umfassend: einen Kern und in den Kern eingesetzte Formleiter, wobei der Kern eine Stirnseite, eine der Stirnseite gegenüberliegende weitere Stirnseite und mehrere in Umfangsrichtung angeordnete Nuten, in denen die Formleiter angeordnet sind, aufweist, wobei sich die Formleiter von der Stirnseite zur weiteren Stirnseite erstrecken und jeweils ein freies Ende aufweisen, welches an der Stirnseite herausragt und jeweils eine Endfläche aufweist, wobei jeweils zwei der Endflächen derart zusammengefügt sind, dass die zwei Endflächen ein Paar bilden, wobei ein jeweiliges Paar der Endflächen des Paars entlang einer ersten Trajektorie und einer zweiten Trajektorie auf den Endflächen verschweißt sind, wobei die erste Trajektorie und die zweite Trajektorie jeweils einen Anfangspunkt und einen davon unterschiedlichen Endpunkt aufweisen, wobei die erste Trajektorie und die zweite Trajektorie zwischen dem Anfangspunkt und dem Endpunkt konkav verlaufen. Entlang der Trajektorien kann eine Schweißnaht ausgebildet sein.

Die der Erfindung zugrundeliegende Aufgabe wird ferner gelöst durch eine rotierende elektrische Maschine, umfassend ein erfindungsgemäßes erstes Aktivteil und einen, insbesondere erfindungsgemäßen, zweites Aktivteil, wobei die elektrische Maschine zum Antreiben eines Fahrzeugs eingerichtet ist. Das Fahrzeug kann ein Hybridfahrzeug oder ein batterieelektrisches Fahrzeug sein.

Sämtliche Ausführungen zum erfindungsgemäßen Verfahren lassen sich analog auf das erfindungsgemäße Aktivteil und die erfindungsgemäße rotierende elektrische Maschine übertragen, sodass auch mit diesen die zuvor beschriebenen Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels des erfindungsgemäßen Aktivteils;
- Fig. 2: eine Detailansicht zweier Formleiter im Bereich ihrer freien Enden gemäß dem ersten Ausführungsbeispiel;
- Fig. 3: eine stirnseitige Ansicht der Endflächen eines der Paare;
- Fig. 4 bis 8: jeweils eine stirnseitige Ansicht der Endflächen eines der Paare gemäß einem weiteren Ausführungsbeispiel; und
- Fig. 9: eine Prinzipskizze eines Fahrzeugs mit einem Ausführungsbeispiel der erfindungsgemäßen elektrischen Maschine.

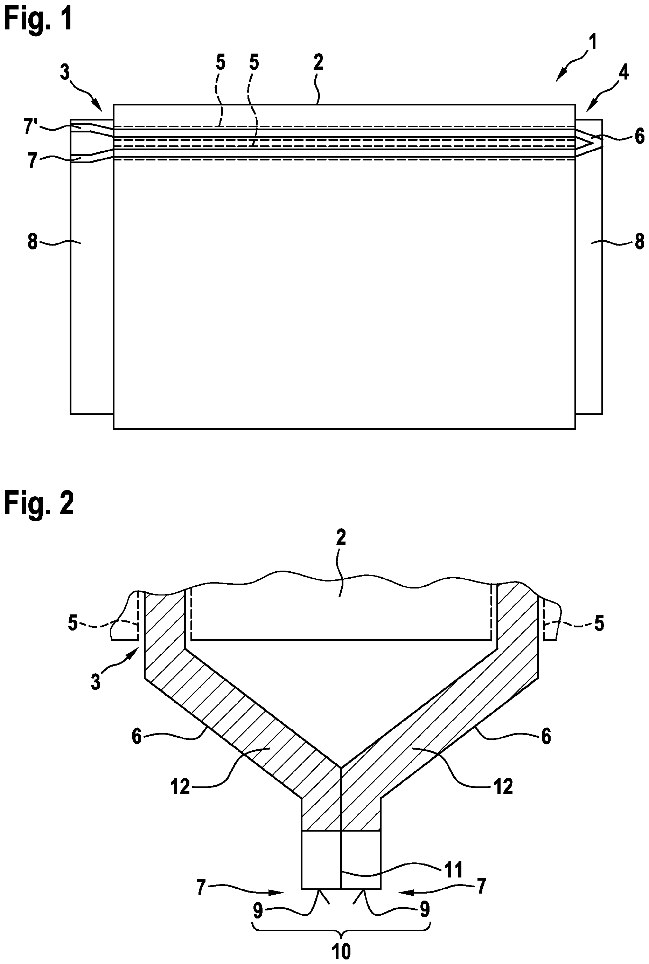

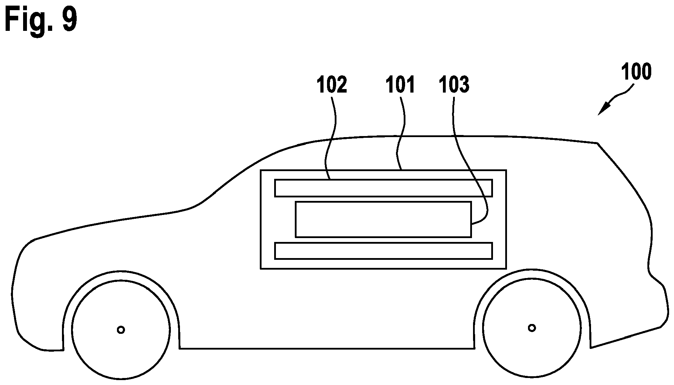

Fig. 1 ist eine Prinzipskizze eines ersten Ausführungsbeispiels eines Aktivteils 1 für eine rotierende elektrische Maschine 101 (vgl. Fig. 9).

Das Aktivteil 1 umfasst einen Kern 2, der in allgemein bekannter Weise aus einer Vielzahl geschichteter gegeneinander elektrisch isolierter Einzelbleche (nicht gezeigt) gebildet sein und in diesem Fall auch als Blechpaket aufgefasst werden kann. Der Kern 2 weist eine Stirnseite 3 und eine der Stirnseite 3 gegenüberliegende weitere Stirnseite 4 auf. Im Kern 2 sind ferner mehrere in Umfangsrichtung angeordnete Nuten 5 ausgebildet, die sich von der Stirnseite 3 zur weiteren Stirnseite 4 in axialer Richtung erstreckenden und den Kern 2 vollständig axial durchsetzen. In Fig. 1 sind lediglich zwei der Nuten 5 rein schematisch dargestellt.

Das Aktivteil 1 umfasst ferner mehrere in den Kern 2 eingesetzte Formleiter 6, von denen in Fig. 1 lediglich ein einziger dargestellt ist. Die Formleiter 6 erstrecken sich von der Stirnseite 3 zur weiteren Stirnseite 4 und weisen jeweils ein freies Ende 7 auf. Im vorliegenden Ausführungsbeispiel ist der Formleiter 6 exemplarisch aus Kupfer und durch einen mehrfach gebogenen Draht ausgebildet. Der Formleiter 6 erstreckt sich dabei vom freien Ende 7 an der Stirnseite 3 in axialer Richtung zur weiteren Stirnseite 4, weist an der weiteren Stirnseite 4 eine 180-Grad-Biegung auf und erstreckt sich zurück von der weiteren Stirnseite 4 durch eine andere Nut 5 zur Stirnseite 3. An der Stirnseite 3 weist der Formleiter 6 ein weiteres freies Ende 7' auf. Der Formleiter 6 hat dementsprechend eine U-Form oder V-Form und kann auch als Leitersegment einer Haarnadelwicklung (englisch hair pin winding) aufgefasst werden. An beiden Stirnseiten 3, 4 bilden die Formleiter rein schematisch dargestellte Wickelköpfe 8 aus.

Fig. 2 ist eine Detailansicht zweier Formleiter 6 im Bereich ihrer freien Enden 7 gemäß dem ersten Ausführungsbeispiel.

Ersichtlich ragen die Formleiter 6 aus dem Kern 2 an dessen Stirnseite 3 heraus. Die freien Enden 7 weisen jeweils eine Endfläche 9 auf, die sich im Wesentlichen senkrecht zur Axialrichtung bzw. senkrecht zur Erstreckungsrichtung der Formleiter erstreckt. Zum Ausbilden des Paares 10 sind die Endflächen 9 zusammengefügt. Ein Spalt zwischen den Endflächen 9 oder eine Berührung der Endflächen 9 bildet dabei einen Grenzbereich 11 aus.

Jedes Paar 10 der Endflächen 9 ist mittels eines Laserstrahls miteinander verschweißt, sodass die freien Enden 7 bzw. die Formleiter 6 elektrisch leitfähig und mechanisch miteinander verbunden sind. Durch das Verschweißen wird oder werden ein oder mehrere Strompfade ausgebildet, die dazu eingerichtet sind, bei einer Bestromung ein magnetisches Feld zur Erzeugung einer elektromotorischen Kraft der rotierenden elektrischen Maschine 101 (siehe Fig. 9) zu erzeugen.

Fig. 2 zeigt ferner schematisch durch eine Schraffur eine äußere elektrisch isolierende Oberflächenschicht 12 der Formleiter 6. Die Oberflächenschicht 12 umgibt ein elektrisch leitfähiges Material der Formleiter 6. Lediglich an den freien Enden 7, 7' liegt das elektrisch leitfähige Material frei, sodass die Oberflächenschicht 12 durch den thermischen Energieeintrag des Laserstrahls nicht beschädigt wird.

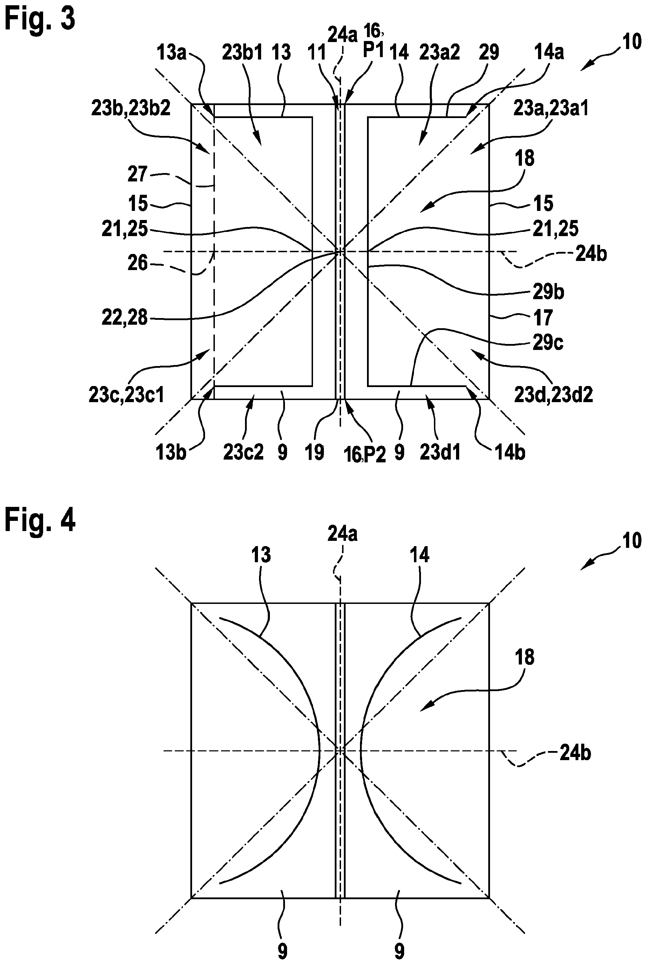

Fig. 3 ist eine stirnseitige Ansicht der Endflächen 9 eines der Paare 10 gemäß dem ersten Ausführungsbeispiel.

Jedes Paar 10 ist auf den Endflächen 9 entlang einer ersten Trajektorie 13 und einer zweiten Trajektorie 14 verschweißt. Die Trajektorien 13, 14 weisen jeweils einen Anfangspunkt 13a, 14a und einen Endpunkt 13b, 14b auf. Die erste Trajektorie 13 verläuft zwischen ihrem Anfangspunkt 13a und ihrem Endpunkt 13b konkav. Ebenso verläuft die zweite Trajektorie 14 zwischen ihrem Anfangspunkt 14a und ihrem Endpunkt 14b konkav.

Ein Rand 15 der Endfläche 9 eine jeweiligen Formleiters 6 besteht aus einem inneren Randabschnitt 16 und einem äußeren Randabschnitt 17. In Fig. 3 sind Anfang und Ende des inneren Randabschnitts 16 mit Pfeilen P1, P2 markiert. Der innere Randabschnitt 16 einer der Endflächen 9 eines jeweiligen Paars 10 verläuft entlang des inneren Randabschnitts 16 der anderen Endfläche 9 des jeweiligen Paars 10. Zwischen den inneren Randabschnitten 16 verläuft der Grenzbereich 11. Eine jeweilige Trajektorie 13, 14 verläuft auf einer Fläche 18, auf deren Rand 19 die äußeren Randabschnitte 17 liegen. Die Fläche 18 schließt auch den Grenzbereich 11 ein. Ein Mittelpunkt 21 einer jeweiligen Trajektorie 13, 14 liegt näher an einem Mittelpunkt 22 der Fläche 18 als ihr Anfangspunkt 13a, 14a und ihr Endpunkt 14a, 14b.

Die Fläche 18 ist ferner in einen ersten bis vierten Quadranten 23a, 23b, 23c, 23d untergliedert. Auf einer ersten Linie 24a liegt eine gemeinsame Grenzlinie des ersten Quadranten 23a und des zweiten Quadranten 23b. Auf der ersten Linie 24a liegt ferner eine gemeinsame Grenzlinie des dritten Quadranten 23c und des vierten Quadranten 23d. Auf einer zweiten Linie 24b liegen eine gemeinsame Grenzlinie des ersten und vierten Quadranten 23a, 23d und eine gemeinsame Grenzlinie des zweiten und dritten Quadranten 23b, 23c. Die Quadranten 23a-d sind entsprechend ihrer Reihenfolge entgegen des Uhrzeiger Sinns bei stirnseitigem Blick auf die Endflächen 9 benannt. Die erste Linie 24a schneidet die zweite Linie 24b senkrecht und verläuft entlang des Grenzabschnitts 11.

Der Anfangspunkt 13a und der Endpunkt 13b der ersten Trajektorie 13 liegen in zwei unterschiedlichen, auf derselben Seite der ersten Linie 24a liegenden Quadranten, nämlich im zweiten und dritten Quadranten 23b, 23c. Der Anfangspunkt 14a und der Endpunkt 14b der zweiten Trajektorie 14 liegen in unterschiedlichen, auf der anderen Seite der ersten Linie 24b liegenden Quadranten, nämlich im ersten und vierten Quadranten 23a, 23b. Dabei verlaufen die erste Trajektorie 13 und die zweite Trajektorie 14 vollständig innerhalb derjenigen Quadranten 23a-d, in denen ihr Anfangspunkt 13a, 14a und ihr Endpunkt 13b, 14b liegen.

Zu erkennen ist ferner, dass ein Schnittpunkt 25 der ersten Trajektorie 13 mit der zweiten Linie 24b näher an der ersten Linie 24a liegt als ein Schnittpunkt 26 einer gedachten Geraden 27 durch den Anfangspunkt 13a und den Endpunkt 13b mit der zweiten Linie 24b. Ebenso liegt ein Schnittpunkt der zweiten Trajektorie 14 mit der zweiten Linie 24b näher an der ersten Linie 24a als ein Schnittpunkt einer gedachten Geraden durch den Anfangspunkt 14a und den Endpunkt 14b mit der zweiten Linie 24b, wobei in Fig. 3 aus Gründen der Übersichtlichkeit auf eine Kennzeichnung der Schnittpunkte und der Gerade bezüglich der zweiten Trajektorie 14 verzichtet wurde.

Fig. 3 zeigt ferner, dass jeder Quadrant 23a-d diagonal in zwei Oktanten 23a1, 23a2, 23b1, 23b2, 23c1, 23c2, 23d1, 23d2 geteilt ist. Eine gemeinsame Grenzlinie zweier benachbarter Oktanten 23a1 bis 23d2 läuft zu einem Schnittpunkt 28 der ersten Linie 24a mit der zweiten Linie 24b hin. Die erste Trajektorie 13 liegt über eine größere Strecke innerhalb der nicht benachbarten Oktanten 23b1, 23c2 der Quadranten 23b, 23c, als innerhalb der benachbarten Oktanten 23b2, 23c1 der Quadranten 23b, 23c. Die zweite Trajektorie 14 liegt über eine größere Strecke innerhalb der nicht benachbarten Oktanten 23a2, 23d1 der Quadranten 23a, 23d, als innerhalb der benachbarten Oktanten 23a1, 23d2 der Quadranten 23a, 23d.

Gemäß dem ersten Ausführungsbeispiel bestehen die erste Trajektorie 13 und die zweite Trajektorie 14 jeweils aus einem ersten geraden Abschnitt 29a, einem zweiten geraden Abschnitt 29b und einem dritten geraden Abschnitt 29c, die aus Gründen der Übersichtlichkeit nur bei der zweiten Trajektorie 14 in Fig. 3 eingezeichnet sind. Der erste gerade Abschnitt 29a erstreckt sich vom Anfangspunkt 13a, 14a aus. Der dritte gerade Abschnitt 29c erstreckt sich zum Endpunkt 13b, 14b hin. Der zweite gerade Abschnitt 29b verbindet den ersten geraden Abschnitt 29a mit dem dritten geraden Abschnitt 29c. Ferner schließen der erste gerade Abschnitt 29a mit dem zweiten geraden Abschnitt 29b und der zweite gerade Abschnitt 29b mit dem dritten geraden Abschnitt 29c jeweils einen rechten Winkel ein.

Gemäß dem ersten Ausführungsbeispiel verlaufen die erste Trajektorie 13 und die zweite Trajektorie 14 ferner spiegelsymmetrisch bezüglich der ersten Linie 24a bzw. bezüglich des Grenzabschnitts 11.

Das Aktivteil 1 kann als Stator 102 oder als Rotor 103 ausgebildet sein (vgl. Fig. 9).

Im Folgenden werden weitere Ausführungsbeispiele des Aktivteils 1 beschrieben. Dabei sind gleiche oder gleichwertige Komponenten mit identischen Bezugszeichen versehen.

Fig. 4 ist eine stirnseitige Ansicht der Endflächen 9 eines der Paare 10 gemäß einem zweiten Ausführungsbeispiel des Aktivteils 1, auf das sich bis auf die im Folgenden beschriebenen Abweichungen alle Ausführungen zum ersten Ausführungsbeispiel übertragen lassen. Beim zweiten Ausführungsbeispiel beschreiben die Trajektorien 13, 14 anstelle der geraden Abschnitte 29a-c (siehe Fig. 3) jeweils eine gewölbte Kurve, beispielsweise einen Kreisbogen, einen Ellipsenbogen, eine Parabel oder eine Hyperbel auf der Fläche 18.

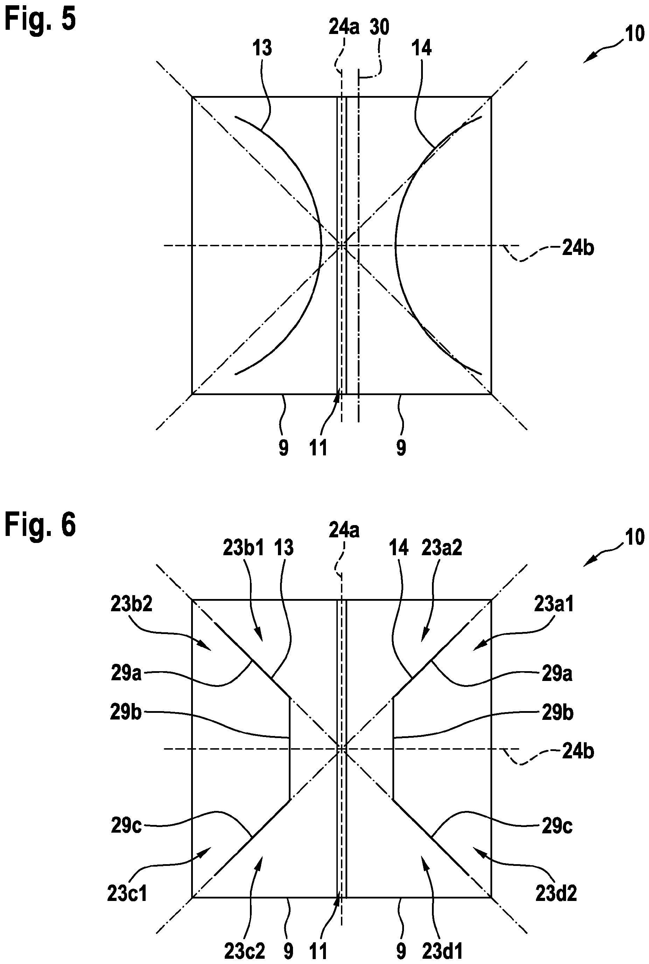

Fig. 5 ist eine stirnseitige Ansicht der Endflächen 9 eines der Paare 10 gemäß einem dritten Ausführungsbeispiel des Aktivteils 1, auf das sich bis auf die im Folgenden beschriebenen Abweichungen alle Ausführungen zum zweiten Ausführungsbeispiel übertragen lassen. Beim dritten Ausführungsbeispiel verlaufen die erste Trajektorie 13 und die zweite Trajektorie 14 nicht spiegelsymmetrisch bezüglich der ersten Linie 24a bzw. bezüglich des Grenzabschnitts 11, sondern spiegelsymmetrisch bezüglich einer gegenüber der ersten Linie 24a bzw. des Grenzabschnitts 11 parallelverschobenen Geraden 30.

Fig. 6 ist eine stirnseitige Ansicht der Endflächen 9 eines der Paare 10 gemäß einem vierten Ausführungsbeispiel des Aktivteils 1, auf das sich bis auf die im Folgenden beschriebenen Abweichungen alle Ausführungen zum ersten Ausführungsbeispiel übertragen lassen. Beim vierten Ausführungsbeispiel schließen der erste gerade Abschnitt 29a mit dem zweiten geraden Abschnitt 29b und der zweite gerade Abschnitt 29b mit dem dritten geraden Abschnitt 29c jeweils einen Winkel ein, der größer als 90° ist. Vorliegend beträgt der Winkel 135°. Die ersten und dritten geraden Abschnitte 29a, 29c verlaufen außerdem auf den Grenzlinien benachbarter Oktanten 23a1 bis 23d2.

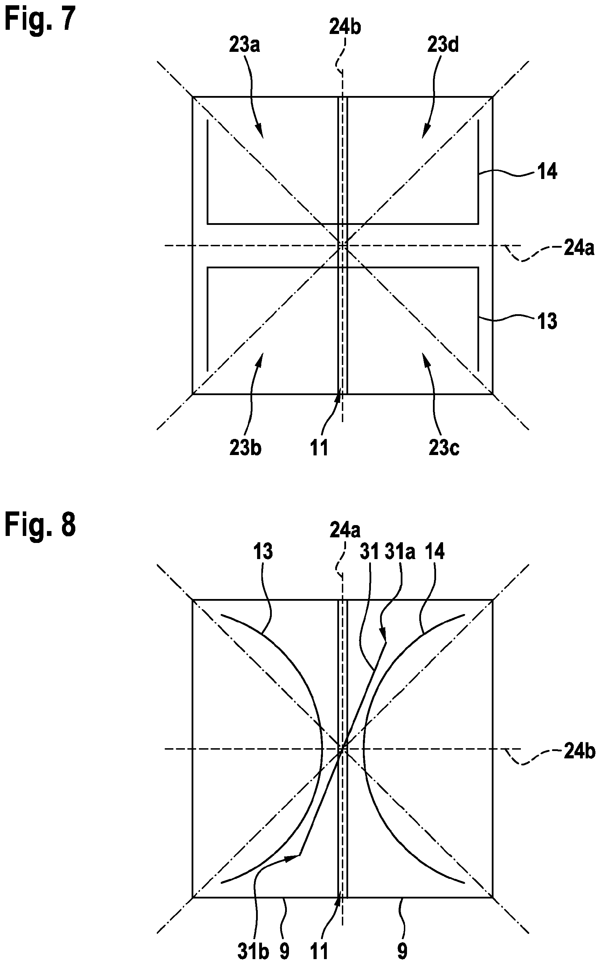

Fig. 7 ist eine stirnseitige Ansicht der Endflächen 9 eines der Paare 10 gemäß einem fünften Ausführungsbeispiel des Aktivteils 1, auf das sich bis auf die im Folgenden beschriebenen Abweichungen alle Ausführungen zum ersten Ausführungsbeispiel übertragen lassen. Beim fünften Ausführungsbeispiel verläuft die zweite Linie 24b entlang des Grenzabschnitts 11. Dadurch erstrecken sich die Trajektorien 13, 14 über den Grenzabschnitt und die Benennung der Quadranten 23a-d ist im Vergleich zu Fig. 1 um 90° - hier exemplarisch gegen den Uhrzeigersinn - gedreht.

Fig. 8 ist eine stirnseitige Ansicht der Endflächen 9 eines der Paare 10 gemäß einem sechsten Ausführungsbeispiel des Aktivteils 1, auf das sich bis auf die im Folgenden beschriebenen Abweichungen alle Ausführungen zum zweiten Ausführungsbeispiel übertragen lassen. Beim sechsten Ausführungsbeispiel ist eine dritte Trajektorie 31 vorgesehen, die überschneidungsfrei zwischen der ersten und zweiten Trajektorie 13, 14 liegt und einen Anfangspunkt 31a und einen davon unterschiedlichen Endpunkt 31b aufweist. Die dritte Trajektorie 31 verläuft hier exemplarisch gerade und schneidet den Grenzbereich 11.

Gemäß weiteren Ausführungsbeispielen des Aktivteils 1 wird die Spiegelsymmetrie des dritten Ausführungsbeispiels auf die Trajektorien gemäß dem ersten, vierten, fünften oder sechsten Ausführungsbeispiel angewendet.

Gemäß weiteren Ausführungsbeispielen des Aktivteils 1 verläuft die zweite Linie 24b wie beim fünften Ausführungsbeispiel beschrieben entlang des Grenzbereichs 11 und die Trajektorien 13, 14, 31 verlaufen entsprechend dem zweiten, dritten, vierten oder sechsten Ausführungsbeispiel.

Gemäß weiteren Ausführungsbeispielen des Aktivteils 1 ist eine dritte Trajektorie 31 entsprechend dem sechsten Ausführungsbeispiel bei eines Aktivteil 1 gemäß dem ersten bis fünften Ausführungsbeispiel vorgesehen.

Im Folgenden werden Ausführungsbeispiele eines Verfahrens zur Herstellung des Aktivteils 1 gemäß den vorangehenden Ausführungsbeispielen beschrieben:
Das Verfahren weist einen ersten Schritt des Bereitstellens des Kerns 2 und der in den Kern 2 eingesetzten Formleiter 6 auf. In einem anschließenden zweiten Schritt werden jeweils zwei Endflächen 9 aneinandergefügt, sodass die zwei Endflächen 9 ein Paar 10 bilden.

In einem anschließenden dritten Schritt wird ein jeweiliges Paar 10 mittels eines Laserstrahls verschweißt, der auf den Endflächen 9 des Paars entlang der ersten Trajektorie 13 und der zweiten Trajektorie und ggf. entlang der dritten Trajektorie 31 entsprechend einem der zuvor beschriebenen Ausführungsbeispiele geführt wird. Dabei wird eine den Laserstrahl erzeugende Laservorrichtung verwendet. Die Laservorrichtung ist in einem deaktivierten Zustand betreibbar, in welchem der Laserstrahl abgeschaltet ist oder eine für ein Aufschmelzen eines Materials der Formleiter 6 unzureichende Leistung aufweist. Die Laservorrichtung ist ferner in einem aktivierten Zustand betreibbar, in welchem der Laserstrahl das Material des Formleiters 6 aufschmelzen kann.

Der dritte Schritt des Verschweißens umfasst ferner folgende Schritte für eine jeweilige Trajektorie 13, 14, 31: Ausrichten der Laservorrichtung auf den Anfangspunkt 13a, 14a, 31a der Trajektorie 13, 14, 31 im deaktivierten Zustand; und Führen des Laserstrahls im aktivierten Zustand der Laservorrichtung vom Anfangspunkt 13a, 14a, 31a entlang der Trajektorie 13, 14, 31 zum Endpunkt der Trajektorie 13b, 14b, 31b. Dabei wird die Laservorrichtung zwischen dem Ausrichten und dem Führen aus dem deaktivierten Zustand in den aktivierten Zustand überführt, wenn die Laservorrichtung auf den Anfangspunkt 13a, 14a, 31a der Trajektorie 13, 14, 31 ausgerichtet ist, und aus dem aktivierten Zustand in den deaktivierten Zustand überführt, wenn das Führen den Endpunkt 13b, 14b, 31b der Trajektorie erreicht hat.

Optional kann vorgesehen sein, dass ein Energieeintrag des Laserstrahls entlang der ersten Trajektorie 13 innerhalb der nicht benachbarten Oktanten 23b1, 23c2 der Quadranten 23b, 23c, in denen die erste Trajektorie 13 liegt, größer als innerhalb der benachbarten Oktanten 23b2, 23c1 der Quadranten 23b, 23c, in denen die erste Trajektorie 13 liegt, ist. Entsprechend kann vorgesehen sein, dass ein Energieeintrag des Laserstrahls entlang der zweiten Trajektorie 14 innerhalb der nicht benachbarten Oktanten 23a2, 23d1 der Quadranten 23a, 23d, in denen die zweite Trajektorie 14 liegt, größer als innerhalb der benachbarten Oktanten 23a1, 23d2 der Quadranten 23a, 23d, in denen die zweite Trajektorie 14 liegt, ist.

Es ist zu beachten, dass das durch Durchführung des Verfahrens erhaltene Aktivteil 1 ― je nach Parametrierung des Schweißvorgangs - nicht zwingend Schweißnähte in Form der Trajektorien aufweisen muss.

Fig. 9 ist eine Prinzipskizze eines Fahrzeugs 100 mit einem Ausführungsbeispiel einer rotierenden elektrischen Maschine 101. Die elektrische Maschine 101 weist einen Stator 102 und einen Rotor 103 auf. Der Stator 102 und/oder der Rotor 103 sind als Aktivteil 1 gemäß einem der zuvor beschriebenen Ausführungsbeispiele ausgebildet oder durch eines der zuvor beschriebenen Ausführungsbeispiele des Verfahrens erhalten.

Die elektrische Maschine 101 ist zum Antreiben des Fahrzeugs 100 eingerichtet. Das Fahrzeug 100 ist dementsprechend ein batterieelektrisches Fahrzeug (BEV) oder ein Hybridfahrzeug.

## Patentansprüche

1. Verfahren zur Herstellung eines Aktivteils (1) für eine rotierende elektrische Maschine (101), umfassend folgende Schritte:
― Bereitstellen eines Kerns (2) für das Aktivteil (1) und in den Kern eingesetzter Formleiter (6), wobei der Kern (2) eine Stirnseite (3), eine der Stirnseite (4) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und eine Endfläche (9) aufweist;
― Aneinanderfügen von jeweils zwei der Endflächen (9), sodass die zwei Endflächen (9) ein Paar (10) bilden; und
― Verschweißen eines jeweiligen Paars (10) der Endflächen (9) mittels eines Laserstrahls, der auf den Endflächen (9) des Paars (10) entlang einer ersten Trajektorie (13) und einer zweiten Trajektorie (14) geführt wird, wobei die erste Trajektorie (13) und die zweite Trajektorie (14) jeweils einen Anfangspunkt (13a, 14a) und einen davon unterschiedlichen Endpunkt (13b, 14b) aufweisen,
**dadurch gekennzeichnet,**
**dass** die erste Trajektorie (13) und die zweite Trajektorie (14) zwischen dem Anfangspunkt (13a, 14a) und dem Endpunkt (13b, 14b) konkav verlaufen.

2. Verfahren nach Anspruch 1, wobei
ein Rand (15) der Endfläche (9) eines jeweiligen Formleiters (6) aus einem inneren Randabschnitt (16) und einem äußeren Randabschnitt (17) besteht, wobei der innere Randabschnitt (16) einer der Endflächen (9) eines jeweiligen Paars (10) entlang des inneren Randabschnitts (16) der anderen Endfläche (9) des jeweiligen Paars (10) verläuft und zwischen den inneren Randabschnitten (16) ein, insbesondere durch einen Spalt zwischen den inneren Randabschnitten oder eine Berührung der inneren Randabschnitte ausgebildeter, Grenzbereich (11) verläuft, wobei eine jeweilige Trajektorie (13, 14) auf einer Fläche (18) verläuft, auf deren Rand die äußeren Randabschnitte (17) liegen und die den Grenzbereich (11) einschließt.

3. Verfahren nach Anspruch 2, wobei
ein jeweiliger Mittelpunkt (21) der ersten Trajektorie (13) und der zweiten Trajektorie (14) näher an einem Mittelpunkt (22) der Fläche (18) liegt als der Anfangspunkt (13a, 14a) und der Endpunkt (13b, 14b) der Trajektorie (13, 14).

4. Verfahren nach Anspruch 2 oder 3, wobei
die Fläche (18) in einen ersten bis vierten Quadranten (23a-d) untergliedert ist, wobei auf einer ersten Linie (24a) eine gemeinsame Grenzlinie des ersten und zweiten Quadranten (23a, b) und eine gemeinsame Grenzlinie des dritten und vierten Quadranten (23c, d) liegen und auf einer zweiten Linie (24b), die die erste Linie (24a) schneidet, eine gemeinsame Grenzlinie des ersten und vierten Quadranten (23a, d) und eine gemeinsame Grenzlinie des zweiten und dritten Quadranten (23b, c) liegen.

5. Verfahren nach Anspruch 4, wobei
der Anfangspunkt (13a) und der Endpunkt (13b) der ersten Trajektorie (13) in zwei unterschiedlichen, auf derselben Seite der ersten Linie (24a) liegenden Quadranten (23b, 23c) liegen und der Anfangspunkt (14a) und der Endpunkt (14b) der zweiten Trajektorie (14) in unterschiedlichen, auf der anderen Seite der ersten Linie (24a) liegenden Quadranten (23a, 23d) liegen.

6. Verfahren nach Anspruch 4 oder 5, wobei
die erste Linie (23a) entlang des Grenzabschnitts (11) verläuft.

7. Verfahren nach Anspruch 4 oder 5, wobei
die zweite Linie (23b) entlang des Grenzabschnitts (11) verläuft.

8. Verfahren nach einem der Ansprüche 4 bis 7, wobei
die erste Trajektorie (13) und die zweite Trajektorie (14) jeweils vollständig innerhalb derjenigen Quadranten (23a-d) verlaufen, in denen der Anfangspunkt (13a, 14a) und der Endpunkt (13b, 14b) der Trajektorie (14) liegen.

9. Verfahren nach einem der Ansprüche 4 bis 8, wobei
wobei jeder Quadrant (23a-d) diagonal in zwei Oktanten (23a1-23d2) geteilt ist und eine gemeinsame Grenzlinie von jeweils zwei benachbarten Oktanten (23a1-23d2) zu einem Schnittpunkt (28) der ersten Linie (24a) mit der zweiten Linie (23b) hinlaufen, wobei
― sich die erste und die zweite Trajektorie (13, 14) jeweils über eine größere Strecke innerhalb der nicht benachbarten Oktanten (23a1-23d2) der Quadranten (23a-d), in denen die Trajektorie (13, 14) liegt, erstreckt als innerhalb der benachbarten Oktanten (23a1-23d2) der Quadranten (23a-d), in denen die Trajektorie (13, 14) liegt, und/oder
― ein Energieeintrag des Laserstrahls entlang der ersten und zweiten Trajektorie (13, 14) innerhalb der nicht benachbarten Oktanten (23a1-23d2) der Quadranten (23a-d), in denen die Trajektorie (13, 14) liegt, größer als innerhalb der benachbarten Oktanten (23a1-23d2) der Quadranten (23a-d), in denen die Trajektorie (13, 14) liegt, ist.

10. Verfahren nach einem der vorhergehenden Ansprüche, wobei
die erste und die zweite Trajektorie (13, 14) jeweils
― eine gewölbte Kurve, insbesondere einen Kreisbogen, einen Ellipsenbogen, eine Parabel oder eine Hyperbel, auf der Fläche (18) beschreiben oder
― einen ersten bis dritten geraden Abschnitt (29a-c) aufweisen oder daraus bestehen, wobei sich der erste gerade Abschnitt (29a) vom Anfangspunkt aus erstreckt, sich der dritte gerade Abschnitt (29c) zum Endpunkt hin erstreckt und der zweite gerade Abschnitt (29b) den ersten geraden Abschnitt (29a) mit dem dritten geraden Abschnitt (29c) verbindet.

11. Verfahren nach einem der vorhergehenden Ansprüche, wobei der Laserstrahl im Schritt des Verschweißens ferner entlang einer dritten Trajektorie (31) geführt wird, die, insbesondere überschneidungsfrei, zwischen der ersten und zweiten Trajektorie (13, 14) liegt und einen Anfangspunkt (31a) und einen davon unterschiedlichen Endpunkt (31b) aufweist.

12. Verfahren nach einem der vorhergehenden Ansprüche, wobei eine den Laserstrahl erzeugende Laservorrichtung verwendet wird, welche in einem deaktivierten Zustand, in welchem der Laserstrahl abgeschaltet ist oder eine für ein Aufschmelzen eines Materials der Formleiter (6) unzureichende Leistung aufweist, und in einem aktivierten Zustand, in welchem der Laserstrahl das Material des Formleiters (6) aufschmelzen kann, betreibbar ist, wobei
der Schritt des Verschweißens folgende Schritte für eine jeweilige Trajektorie (13, 14, 31) umfasst:
― Ausrichten der Laservorrichtung auf den Anfangspunkt (13a, 14a, 31a) der Trajektorie (13, 14, 31) im deaktivierten Zustand;
― Führen des Laserstrahls im aktivierten Zustand der Laservorrichtung vom Anfangspunkt (13a, 14a, 31a) entlang der Trajektorie (13, 14, 31) zum Endpunkt (13b, 14b, 31b) der Trajektorie (13, 14, 31);
wobei die Laservorrichtung zwischen dem Ausrichten und dem Führen aus dem deaktivierten Zustand in den aktivierten Zustand überführt wird, wenn die Laservorrichtung auf den Anfangspunkt (13a, 14a, 31a) der Trajektorie (13, 14, 31) ausgerichtet ist, und aus dem aktivierten Zustand in den deaktivierten Zustand überführt wird, wenn das Führen den Endpunkt (13b, 14b, 31b) der Trajektorie (13, 14, 31) erreicht hat.

13. Verfahren nach einem der vorhergehenden Ansprüche, wobei das Aktivteil (1) ein Stator (102) oder ein Rotor (103) ist.

14. Aktivteil (1) für eine rotierende elektrische Maschine (101), erhalten durch ein Verfahren nach einem der vorhergehenden Ansprüche und/oder umfassend: einen Kern (2) und in den Kern (2) eingesetzte Formleiter (6), wobei der Kern (2) eine Stirnseite (3), eine der Stirnseite (3) gegenüberliegende weitere Stirnseite (4) und mehrere in Umfangsrichtung angeordnete Nuten (5), in denen die Formleiter (6) angeordnet sind, aufweist, wobei sich die Formleiter (6) von der Stirnseite (3) zur weiteren Stirnseite (4) erstrecken und jeweils ein freies Ende (7) aufweisen, welches an der Stirnseite (3) herausragt und jeweils eine Endfläche (9) aufweist, wobei jeweils zwei der Endflächen (9) derart zusammengefügt sind, dass die zwei Endflächen (9) ein Paar (10) bilden, wobei ein jeweiliges Paar (10) der Endflächen des Paars (9) entlang einer ersten Trajektorie (13) und einer zweiten Trajektorie (14) auf den Endflächen (9) verschweißt sind, wobei die erste Trajektorie (13) und die zweite Trajektorie (14) jeweils einen Anfangspunkt (13a, 14a) und einen davon unterschiedlichen Endpunkt (13b, 14b) aufweisen, wobei die erste Trajektorie (13) und die zweite Trajektorie (14) zwischen dem Anfangspunkt (13a, 14a) und dem Endpunkt (13b, 14b) konkav verlaufen.

15. Rotierende elektrische Maschine (101), umfassend ein erstes Aktivteil (102) nach Anspruch 14 und ein zweites Aktivteil (103), insbesondere nach Anspruch 14, wobei die elektrische Maschine (101) zum Antreiben eines Fahrzeugs (100) eingerichtet ist.
